# EUROPÄISCHE PATENTANMELDUNG

(11) **EP 2 845 562 A1**
(43) Veröffentlichungstag der Anmeldung: **11.03.2015**
(21) Anmeldenummer: 14003067.7
(22) Anmeldetag: 05.09.2014
(51) Int. Cl.: A61C 8/00

(54) **Implantat und System zum Zahnersatz**

(30) Priorität: 05.09.2013 DE 102013014690
(71) Anmelder: Schmüdderich, Wolfgang, 40668 Meerbusch (DE)
(72) Erfinder: Schmüdderich, Wolfgang, 40668 Meerbusch (DE)
(74) Vertreter: König, Gregor Sebastian

(57) **Zusammenfassung**

Die Erfindung betrifft ein Implantat, insbesondere zur Verankerung von Zahnersatz, das einen enossalen Teil aufweist, der in seiner gesamten Höhe im Knochen versenkbar ist, wobei der enossale Teil eine endseitige Manschette aus Keramik aufweist.

## Beschreibung

Die Erfindung betrifft ein Implantat, insbesondere zur Verankerung von Zahnersatz, das einen enossalen Teil aufweist, und ein System zum Zahnersatz.

Heute gebräuchliche zahnärztliche Implantate sind in der Regel Schrauben, welche nach dem Prinzip eines Dübels funktionieren.

Das Einbringen in den Kieferknochen erfolgt in einem kleineren Eingriff unter sterilen Bedingungen. In der Regel wird das Implantat mit speziellen Instrumenten und einem Drehmoment von 30-40 Ncm in den Knochen eingeschraubt (Außengewinde).

Nach erfolgter Einheilung (Osseointegration) erfolgt die Versorgung des Implantates mit einem Aufbau, welcher in das Innengewinde eingeschraubt wird. Hieran schließt sich die Phase der prothetischen Nutzung an.

Die meisten Implantattypen sind zweiteilig, vor allem zur Verankerung von Totalprothesen gibt es aber auch einteilige Implantate, bei denen der prothetische Aufbau fest mit dem in den Knochen einzubringenden Schraubenanteil verbunden ist. Die Einheilung erfolgt unter der geschlossenen Schleimhautdecke (subgingival/zweiteilige Implantate) oder auch mit Kontakt zur Mundhöhle (transgingival/einteilige Implantate).

Bei den derzeit gebräuchlichen Implantatmaterialien sind Titanimplantate als Goldstandard anzusehen. Verwendet wird Titan mit dem Reinheitsgrad 4 (Reintitan). In Kontakt zum Knochen hat Titan eine osseokonduktive Wirkung. Knochenbildende Zellen (Osteoblasten) lagern sich auf der Implantatoberfläche an und führen zur knöchernen Einscheidung des Implantates, wobei es zu einem unmittelbaren Kontakt zwischen Knochenzellen und der Implantatoberfläche kommt ("Osseointegration"). Zur Unterstützung dieses Vorganges werden die im Knochen befindlichen Implantatanteile (also das Schraubengewinde) angeraut. Es resultiert eine Oberflächenvergrößerung. In den Mikrovertiefungen der rauen Oberflächen scheinen Osteoblasten ideale Anlagerungsbedingungen vorzufinden, was die anschließende Knochenbildung fördert.

Aus WO 2008/009474 A1 ist ein Implantat zur Verankerung von Zahnersatz bekannt, bei dem ein enossaler Abschnitt und ein gingivaler Abschnitt vorgesehen sind. Der enossale Abschnitt wird durch Titan oder eine Titanlegierung gebildet. Der gingivale Abschnitt weist eine Beschichtung aus Zirkonnitrid und/oder Zirkonoxid auf.

Aufgabe der Erfindung ist es, ein verbessertes Zahnimplantat zu schaffen, welches eine Optimierung der Heilung, beispielsweise bei Knochendefiziten im crestalen Kieferabschnitt sowie zur Prophylaxe eines entzündlichen Knochenabbaus, erlaubt.

Kern der Erfindung ist es, die Materialien in ihrer Anordnung derart zu platzieren, dass auch bei einem Knochenmangel oder einem Knochenabbau optimale Voraussetzungen zur Osseointegration bzw. Heilung vorliegen. Es wird ein Implantat, insbesondere zur Verankerung von Zahnersatz, geschaffen, das einen enossalen Teil aufweist, der in seiner gesamten Höhe im Knochen versenkbar ist, wobei der enossale Teil eine endseitige Manschette aus Keramik aufweist. Der enossale Teil mitsamt der Keramikmanschette wird im Knochen versenkt. Die Implantatschulter, d.h. der endseitige Bereich des enossalen Teils liegt auf Knochenniveau bzw. darunter. Nur im Falle eines entzündlichen Knochenabbaus kann der Keramikring mit Weichgewebe in Kontakt treten und dann die optimalen Voraussetzungen zur Heilung der Entzündung bieten, da die Keramikoberfläche nicht von Keimen besiedelt werden kann.

Der dem erfindungsgemäßen Implantat zugrundeliegende Kerngedanke kombiniert die bekannten positiven biologischen Eigenschaften der beiden Werkstoffe, jeweils an der für ihre biologischen Effekte bedeutsamen Position.

Durch das Einbringen einer angerauten Titanoberfläche in den Knochen kann die Osseointegration hier in gewohnter Weise ablaufen. Gleichzeitig kann das Konstruktionsprinzip des zweiteiligen Implantats beibehalten werden, wodurch die Möglichkeit der gedeckten Einheilung - vor allem in Fällen mit erforderlicher Augmentation von Bedeutung - sowie eines Auswechselns der Aufbauteile bei Bedarf erhalten bleiben kann.

Bei dem erfindungsgemäßen Implantat kann es sich vorzugsweise um ein zwei- oder mehrteiliges Implantat handeln, sodass der enossale Teil des Implantats geschlossen unter der Schleimhautdecke einheilen kann. Sogenannte Implantationsprotokolle geben Anweisungen für die chirurgische Vorgehensweise, wie insbesondere der enossale Teil in den Kieferknochen einzubringen ist. Erfindungsgemäß ist für das Implantat ein Implantationsprotokoll vorgesehen, gemäß dem der enossale Teil in seiner gesamten Höhe knochenversenkbar ist, um eine geschlossene Einheilung zu ermöglichen. Das zu dem erfindungsgemäßen Implantat gehörige Implantationsprotokoll sieht somit ein chirurgisches Vorgehen vor, das zu zwei Zeitpunkten erfolgt (zweizeitiges Verfahren). Bei dem erfindungsgemäßen Implantat handelt es sich demnach um ein mehrteiliges Implantat, das einen enossalen Teil (dem im Knochen verankerten Implantatkörper) und ein Kopfteil (dem sogenannten Abutment, das die Suprakonstruktion aufnimmt) aufweist. Zwischen dem enossalen Teil und dem Abutment kann ein sogenannter Halsteil, der in der Mundschleimhaut angeordnet ist, vorgesehen sein. Die zwei bzw. drei Teile des erfindungsgemäßen Implantats können z.B. miteinander verschraubt werden. Die sogenannten Superkonstruktionen (Kronen, Brücken- oder Prothesenanker) können verschraubt, zementiert, verklebt oder anderweitig verbunden werden.

An der so sensiblen Grenzfläche der Implantatschulter zu den intraoralen Weichgeweben liegt der Vorteil der keramischen Werkstoffe, die durch ihre osseoinerten Eigenschaften die Knochenanlagerung begünstigen. Dies betrifft u.a. Fälle, bei denen Implantate im bereits atrophierten Alveolarfortsatz mit bestehendem transversalen Knochendefizit inseriert werden sollen. Selbst wenn die Knochenbildung zirkulär um die Implantatschulter ausbleibt und/oder nur unvollständig erfolgt, bietet die keramische Oberfläche den periimplantären Weichgeweben optimale Anlagerungsmöglichkeiten. Weiterhin muss der Knochen somit nicht mehr vorbereitend geglättet werden, was immer mit einem gewissen Verlust an Knochenhöhe verbunden ist.

Weiterhin ist im Falle einer Knochenrückbildung um das Implantat zu erwarten, dass durch das dann resultierende Freiliegen einer glattpolierten keramischen Oberfläche, welche einer Plaqueanlagerung entgegenwirken kann, eine Vermeidung bzw. Verminderung einer Periimplantitis möglich ist.

Bei der Keramik kann es sich um eine Aluminiumoxidkeramik handeln, bevorzugt handelt es sich um Zirkonoxidkeramiken. Zirkonoxidkeramiken weisen sehr gute Eigenschaften bezüglich Biegefestigkeit und Druckstabilität auf.

Zirkonoxidkeramiken für zahnärztliche Implantate werden durch Brennen und Sinterung sowie ggf. Pressvorgänge hergestellt; in der Regel sind diese durch Zusatz von Yttrium stabilisiert. Im Gegensatz zum Titan haben Keramiken im Kontakt zum Knochen eine osseoinerte Wirkung, gestatten also an ihrer Grenzfläche reizlos die Knochenbildung. Die im Kontakt zum Knochen stehenden Keramikoberflächen sind glatt. Bevorzugt können die Keramikoberflächen poliert sein. Dies stellt bei Keramikimplantaten die optimale Voraussetzung zur Osseointegration dar.

Der zahntragende Kieferabschnitt - Alveolarfortsatz - nimmt die Wurzeln der Zähne auf. Er besteht aus schwammartigem, spongiösen Knochen und ist zu den Seiten hin durch eine härtere und feste kortikale Knochenlamelle begrenzt. Im Unterkiefer sitzt der Alveolarfortsatz einer festen Knochenspange auf, in welcher im Seitenzahnbereich der sensible Nervus alveolaris inferior verläuft. Im Oberkiefer grenzen die Kiefer- bzw. Nasenhöhlen unmittelbar an den Alveolarfortsatz.

Die Zahnfächer - Alveolen - bestehen innen aus Bündelknochen, dessen Ernährung vom Zahnhalteapparat (Parodont) des jeweiligen Zahnes ausgeht. Geht ein Zahn verloren, so wird dieser Bündelknochen nicht mehr ernährt und atrophiert. Es resultiert ein Volumendefekt des Alveolarfortsatzes.

Nach dem Verlust eines Zahnes kommt es weiterhin durch Fehlen funktioneller Reize auf den Kieferknochen zum Abbau.des zahntragenden Kieferabschnitts. Dieser kann lokalisiert oder auch - beim Fehlen mehrerer oder sogar aller Zähne - generalisiert auftreten. Zu unterscheiden ist hierbei ein vertikaler sowie ein transversaler Knochenabbau.

Der Abbau in transversaler Richtung beginnt unmittelbar nach Verlust des Zahnes, vornehmlich im Bereich der vestibulären Knochenlamelle. Nach etwa 3 Monaten sind bis zu 40% der Knochenbreite bereits abgebaut. Ein langsameres Voranschreiten zeigt der vertikale Knochenabbau. Er geht einher mit einem etwas geringfügigeren Abbau der Knochenhöhe von 2 bis 3 mm und betrifft somit vor allem die krestalen Anteile des Alveolarfortsatzes, während der Knochen zur Kieferbasis hin seine ursprüngliche Dimension beibehält. Im Seitenzahnbereich des Oberkiefers kommt es außerdem zu einer Ausdehnung der Kieferhöhle in die Kieferabschnitte hinein, in denen vormals die Wurzeln der Seitenzähne lokalisiert waren.

Im Querschnitt resultiert so nach längerem Fehlen eines Zahnes in der Regel ein keilförmiger, zur Mundhöhle hin sich zuspitzender Kieferknochen.

Der Erfinder hat erkannt, dass durch das erfindungsgemäße Implantat eine Entzündung der das Implantat umgebenden (Gewebe)Bereiche (Periimplantitis) gelindert werden kann. Dabei kann eine Periimplantitis den Bereich der Schleimhaut betreffen (periimplantäre Mukositis) oder sich auch auf den das Implantat umgebenden Knochen beziehen (periimplantäre Ostitis). Im zweiten Fall kommt es bei konventionellen Implantaten durch den fermentativen Abbau von Knochen zum Freiliegen von angerauten Implantatoberflächen. Auf den freiliegenden Oberflächen bildet sich ein Biofilm aus Proteinen des Speichels sowie der Gewebeflüssigkeiten; dieser bildet Keimen einen Nährboden, was wiederum ein Fortschreiten der Entzündung begünstigt. So entsteht ein Circulus vitiosus, der schließlich zum Implantatverlust führt. Der Erfinder hat erkannt, dass das erfindungsgemäße Implantat in Fällen der Implantation in atrophierten Kieferabschnitten zusätzliche chirurgische Maßnahmen wie Knochenaufbau oder Knochenspreizung minimieren bzw. verhindern kann, da die Knochenbildung durch die Materialeigenschaften der Keramik begünstigt wird.

Der Erfinder hat ferner erkannt, dass es mit fortschreitendem Alter sowie ggf. begünstigt durch Erkrankungen wie Osteoporose, Diabetes mellitus, Tumorerkrankungen mit der Notwendigkeit von Chemotherapien sowie Erkrankungen, welche eine immunsuppressive Therapie erfordern, auch im Bereich des periimplantären Knochens zu einem fortschreitenden Knochenabbau mit konsekutivem Freiliegen der rauen Implantatoberflächen nach dem Stand der Technik kommen kann, wobei Inhaltsstoffe des Zigarettenrauchs diese Vorgänge begünstigen können.

In einer bevorzugten Ausführungsform ist das Zahnimplantat derart bemessen, dass es bei der Insertion allseits möglichst 1,5 mm von Knochen umgeben ist. Die Form und die Dimensionen der zu ersetzenden Zahnkrone kann bevorzugt Einfluss auf den Durchmesser des Implantates an seiner Schulter zur Mundhöhle hin nehmen.

Bevorzugt sollte zum Ersatz eines großen Seitenzahnes ein möglichst breites Implantat (ca. 5 mm) gewählt werden. Zum Ersatz eines schmalen Schneidezahnes wird bevorzugt eine möglichst schmale Implantatschulter verwendet.

Ist der krestale Kieferknochen zu schmal, stehen verschiedene Verfahren zur Verfügung:
- Glättung des spitz zulaufenden Alveolarfortsatzes und somit Schaffung eines breiteren Lagers auf Kosten der Knochenhöhe;
- Spaltung des krestalen Knochens und anschließendes Aufdehnen (Bone- Splitting und Bone- Spreading);
- Anlagern von partikulärem Knochen o.a. Knochenersatzmaterial im Bereich der Knochendefizite und anschließendes Abdecken mit einer Kollagenmembran;
- vorbereitender Knochenaufbau (Transplantation eines autologen Knochenblocks);
- gemeinsam ist diesen Verfahren ein erhöhter operativer Aufwand (zusätzlicher Eingriff/ umfangreiche Schleimhautplastiken) sowie ein erhöhtes operatives Risiko (ausbleibende knöcherne Durchbauung der augmentierten Bereiche mit konsekutivem Freiliegen von Implantatoberflächen und dem Risiko der Entstehung einer Periimplantitis).

Die Manschette aus Keramik kann bevorzugt derart ausgestaltet sein, das die Manschette ringförmig ist. Die Manschette kann an der Implantatschulter über den metallischen Körper des Implantats befestigt sein.

Der metallische Körper und die Manschette können derart aufeinander abgestimmt sein, dass die Außenabmessung der Manschette im Wesentlichen der Außenabmessung des metallischen Körpers entspricht. Hierfür kann der metallische Körper eine Fräsung im Bereich der Implantatschulter aufweisen, die zur Anlage der als Ring ausgebildeten Manschette ausgebildet ist. Das Implantat kann seine in der Seitenansicht zylindrische bzw. wurzelförmige Form im Wesentlichen beibehalten. Eine Verbreiterung der Implantatschulter durch die Manschette ist nicht vorgesehen.

Erfindungsgemäß ist unter einer erfindungsgemäßen Ringform eine Form zu verstehen, die sich einem Ring annähert, aber auch im Querschnitt symmetrische oder asymmetrische Vieleckformen zulässt. In einer bevorzugten Ausführungsform ist der Außenquerschnitt der Manschette ringförmig. Der Innenumfang der Manschette kann ebenfalls ringförmig sein; es sind auch Abweichungen von der Ringform möglich, die symmetrische oder asymmetrische Vieleckformen umfassen. Es ist auch möglich, dass die Manschette ein Außengewinde aufweist, das ein Außengewinde des metallischen Körpers fortsetzt. Das Außengewinde der Manschette und des metallischen Körpers können sich entsprechen. Vorzugsweise weisen Außengewinde der Manschette und Außengewinde des metallischen Körpers die gleiche Steigung auf.

Manschette und/oder metallischer Körper können beispielsweise in CAD/CAM-Technik gefräst sein.

In einer bevorzugten Ausführungsform ist die Manschette als Ring ausgestaltet, der an der Schulter des metallischen Körpers befestigt werden kann. Der Ring kann mittels eines Klebers im Bereich der Implantatschulter aufgeklebt sein (analog dem Kleben eines Keramikinlays). Es kann ein Kleber mit guter biologischer Verträglichkeit verwendet werden (z.B. Panavia®). Es sind Verklebungen für Implantataufbauteile der Firma Camlog® bekannt.

Es kann auch vorgesehen sein, dass der Ring im Bereich der Implantatschulter nach vorheriger Erwärmung unter Ausnutzung des spezifischen thermischen Expansionskoeffizienten für die Keramik aufgebracht wird und eine Klemmpassung erzielt wird, die oberhalb eines Drehmomentes von ca. 60 Ncm liegt.

Es kann auch vorgesehen sein, dass der metallische Körper des enossalen Teils eine Beschichtung aufweist, die entlang seines Umfangs an einem Ende ausgebildet ist. Die Erfindung wird nachfolgend anhand eines in den Zeichnungen dargestellten Ausführungsbeispiels näher erläutert.

In den Zeichnungen zeigt:
- Fig. 1: eine teilweise Schnittdarstellung eines erfindungsgemäßen Implantats in einem Kieferknochen; und
- Fig. 2: eine "Explosionsdarstellung" des erfindungsgemäßen Implantats.

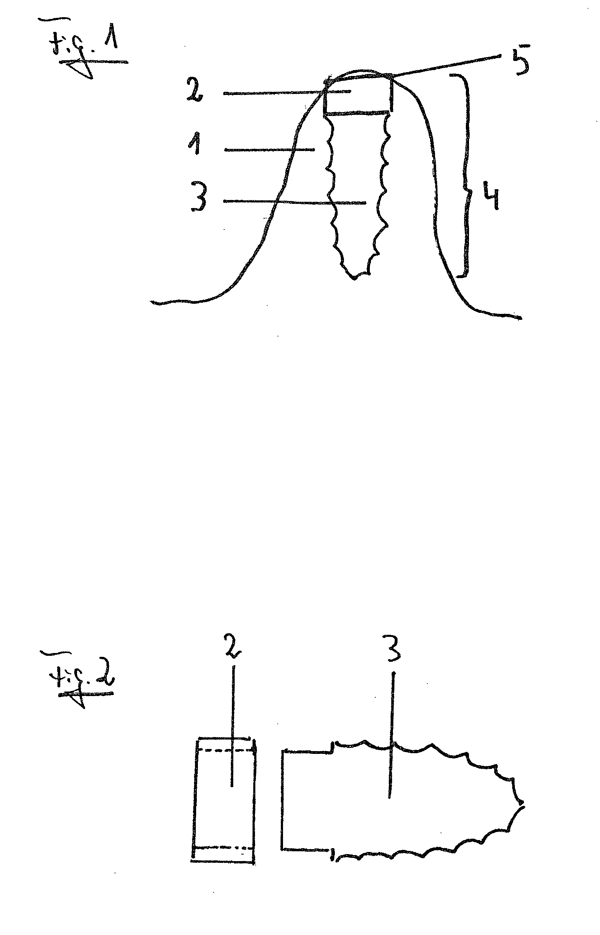

Die Fig. 1 zeigt eine Schnittdarstellung eines in einen Kieferknochen 1 eingebrachten enossalen Teils 4 eines erfindungsgemäßen Implantats. Der enossale Teil 4 ist vollständig im Kieferknochen 1 versenkt. Der enossale Teil 4 weist einen metallischen Körper 3 und eine Manschette 2 auf, die eine Keramik aufweist oder aus einer Keramik besteht. Der enossale Teil 4 ist in seiner gesamten Höhe im Kieferknochen 1 versenkt. Die Implantatschulter 5 ist vom Kieferknochen 1 umgeben.

Fig. 2 zeigt eine Explosionsdarstellung, bei der die im bestimmungsgemäßen Gebrauch an dem metallischen Körper 3 befestigte Manschette 2 von diesem getrennt dargestellt ist.

Über das Außengewinde des metallischen Körpers 3 kann der metallische Körper mit dem Kieferknochen befestigt werden. Der enossale Teil 4 wird in den Kieferknochen 1 geschraubt. Die Manschette 2 ist mit dem metallischen Körper 3 stoffschlüssig und/oder über mittels einer Klemmpassung verbunden.

In dem metallischen Körper 3 kann ein Innengewinde vorgesehen sein, mit dem ein daran angepasstes Abutment und/oder eine Suprakonstruktion verschraubt und/oder verklebt ist.

## Patentansprüche

1. Implantat, insbesondere zur Verankerung von Zahnersatz, das einen enossalen Teil (4) aufweist, der in seiner gesamten Höhe im Knochen versenkbar ist, wobei der enossale Teil (4) eine endseitige Manschette (2) aus Keramik aufweist.

2. Implantat nach Anspruch 1, wobei der enossale Teil (4) einen mit dem Knochen verschraubbaren metallischen Körper (3) aufweist und die Manschette (2) eine Durchgangsöffnung aufweist, durch die ein stirnseitiges Ende des Körpers (3) exponiert ist.

3. Implantat nach Anspruch 1 oder 2, wobei der metallische Körper (3) ein Innengewinde aufweist.

4. Implantat nach einem der Ansprüche 1 bis 3, wobei die Manschette (2) ein mittels Stoffschluss und/oder Klemmpassung befestigtes ringförmiges Element ist.

5. Implantat nach einem der Ansprüche 1 bis 4, wobei der enossale Teil (4) eine Längserstreckung von 6 mm bis 20 mm aufweist, und die Manschette (2) eine Höhe von 1 mm bis 4 mm aufweist.

6. Implantat nach einem der Ansprüche 1 bis 5, wobei die Dicke der Manschette (2) im Bereich von 0,1 mm bis 1 mm ist.

7. System zum Zahnersatz aufweisend ein Implantat gemäß einem der Ansprüche 1 bis 6 und einem Abutment.

8. System nach Anspruch 7, aufweisend eine an das Abutment angepasste Suprakonstruktion, die in dem Abutment aufgenommen befestigbar ist.

9. Verfahren zum Einbringen eines Implantats nach einem der Ansprüche 1 bis 8 in den Knochen, wobei der enossale Teil (4) in seiner gesamten Höhe im Knochen versenkt wird.

10. Verwendung eines Implantats nach einem der Ansprüche 1 bis 8, wobei der enossale Teil (4) in seiner gesamten Höhe im Knochen versenkt wird.
